# EUROPEAN PATENT APPLICATION

(11) **EP 4 317 090 A1**
(43) Date of publication of application: **07.02.2024**
(21) Application number: 22188342.4
(22) Date of filing: 02.08.2022
(51) Int. Cl.: C02F 9/00, C02F 1/28, C02F 1/42, C02F 101/20

(54) **METHOD OF PROCESSING A PROCESS FLUID IN COMPONENT CARRIER MANUFACTURE**

(71) Applicant: AT & S Austria Technologie & Systemtechnik Aktiengesellschaft, 8700 Leoben-Hinterberg (AT)
(72) Inventor: Luttenberger, Susanne, 8344 Bad Gleichenberg (AT)
(74) Representative: Dilg, Haeusler, Schindelmann Patentanwaltsgesellschaft mbH

(57) **Abstract**

There is described a method of manufacturing component carriers in a component carrier manufacture plant (100), the method comprising:
i) providing a process fluid (101) to a component carrier manufacture process (110);
ii) manufacturing the component carriers (110), thereby producing a heavy metal waste fluid (102); and
iii) processing the heavy metal waste fluid (102) by at least one treatment step to a) obtain a processed fluid (101, 105) with drinking water quality and/or b) stream the processed fluid (105) as the process fluid (101) back to the component carrier manufacture process (100), thereby providing a closed process water cycle.

## Description

### Field of the Invention

The invention relates to methods of manufacturing component carriers in a component carrier manufacture plant. Further, the invention relates to a component carrier manufacture plant. Additionally, the invention relates to a use of a specific processing.

Thus, the invention may relate to the technical field of manufacturing component carriers such as printed circuit boards and IC substrates.

### Technical Background

For the production of component carriers such as printed circuit boards and/or IC substrates, large amounts of metals, in particular heavy metals (e.g. copper, nickel, gold, silver, palladium, tin, iron) are required in general. Therefore, in the manufacturing process, metal-containing residues and metal-containing media (in particular solutions), respectively, occur in the different component carrier manufacture processes.

Heavy metal waste fluids substantially origin hereby from two different treatment processes in the component carrier manufacture:
i) the etching process (e.g. etching of copper foils) and
ii) the plating process (e.g. plating with copper layers).

In addition, heavy metal waste fluids are produced during rinsing processes.

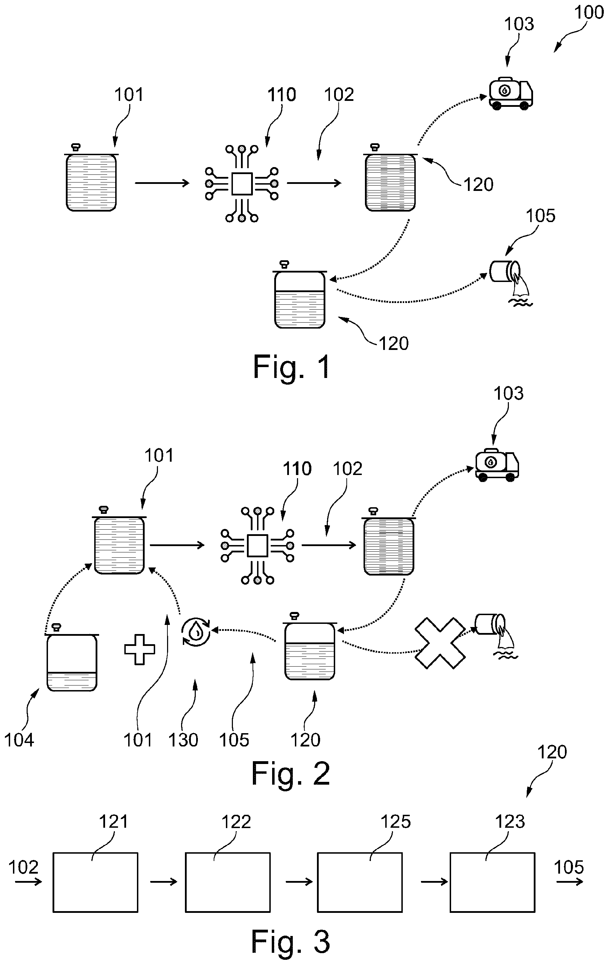

**Figure 1** shows an example of a component carrier manufacture plant 100. A process fluid (e.g. purified water) 101 is provided to the component carrier manufacture process 110. During the manufacture of the component carriers (e.g. by using chemical method steps such as etching, plating, rinsing, etc.), a heavy metal waste fluid 102 is produced that may be highly enriched in heavy metal waste.

Conventionally, the heavy metal waste fluid 102 is discarded provisionally (see reference sign 103), which is, however, cost intensive and environmentally harmful. Even though a part of the heavy metal waste fluid 102 may be processed internally in the component carrier manufacture plant, said processing conventionally merely provides a water in discharge quality, so that the water in discharge quality can be streamed into a river according to local law.

Nevertheless, the described conventional processes may be considered still environmentally harmful and not durable, even though they can be cost intense.

### Summary of the Invention

It is an object of the present invention to enable a cost-efficient, environmentally friendly, and durable processing of a heavy metal waste fluid from the component carrier manufacture.

This object is solved by the subject matters according to the independent patent claims. Preferred embodiments result from the dependent patent claims.

According to an aspect of the invention, there is described a method of manufacturing component carriers in a component carrier manufacture plant, the method comprising:
i) providing a process fluid (e.g. purified water) to a component carrier manufacture process;
ii) manufacturing the component carriers (e.g. by using chemical method steps such as etching, plating, etc.), thereby producing a heavy metal waste fluid; and
iii) processing the heavy metal waste fluid by at least one treatment step to obtain a processed fluid in drinking water quality (e.g. according to local laws).

According to a further aspect of the invention, there is described a method of manufacturing component carriers in a component carrier manufacture plant, the method comprising:
i) providing a process fluid to a component carrier manufacture process;
ii) manufacturing the component carriers, thereby producing a heavy metal waste fluid;
iii) processing the heavy metal waste fluid by at least one treatment step to obtain a processed fluid (in drinking water quality or in discharge quality); and
iv) streaming the processed fluid as the process fluid (in other words: as new process fluid) back to the component carrier manufacture process, thereby providing a closed process water cycle (in the component carrier manufacture plant).

According to a further aspect of the invention, there is described a component carrier manufacture plant, comprising:
i) a component carrier manufacture stage, configured to manufacture component carriers using a process fluid, whereby a heavy metal waste fluid is produced from the process fluid; and
ii) a treatment stage, arranged process-downstream of the component carrier manufacture stage, and configured to process the heavy metal waste fluid in at least one treatment step, so that
   a) the processed fluid comprises drinking water quality, and/or
   b) the processed fluid can be streamed (by means of a recycling stage) as a fresh process fluid back to the component carrier manufacture stage.

According to a further aspect of the invention, there is described a use (method of using) of the combined treatment steps of an active coal filter, a heavy metal ion exchanger, and a mixed-bed ion exchanger, in particular in this order, to process a component carrier manufacture waste fluid so that an obtained processed fluid is in drinking water quality and/or is streamable back to the component carrier manufacture in a closed water cycle.

According to a further aspect of the present invention, a process control device for regulating the above described method and/or the above described device is discussed. The process control device comprises:
i) a database for capturing at least one process parameter (and an actual value, respectively), in particular a plurality of process parameters, from the running process,
ii) a data model unit which is adapted for storing at least one predetermined process parameter (and a target value, respectively), in particular a plurality of predetermined process parameters, and iii) a calculation device which is adapted for
   a) comparing the captured process parameter with the predetermined process parameter (and the pluralities with each other, respectively),
   b) determining a control operation which is based on the result of the comparison (for example actively compensating a difference between the actual value and the target value), and c) performing the predetermined control operation (e.g. adapt a flow rate, etc.).

According to a further aspect of the present invention, a computer program product for controlling a method for manufacturing component carriers is described, which computer program product, when it is executed by one or more processors (and one or more computers, respectively), controls the method (as described above) and/or the device (as described above) and/or the process control device (as described above).

In the context of this document, the term "heavy metal waste fluid" may in particular denote any (liquid) medium which comprises heavy metals and is in particular produced during a component carrier manufacture process in a component carrier manufacture plant. A heavy metal waste fluid may for example comprise a metal such as copper, nickel, gold, silver, cobalt, cadmium, magnesium, sodium, palladium, tin. Further, a heavy metal waste fluid may for example comprise acids such as sulfuric acid, hydrochloric acid, nitrous acid, phosphoric acid. The metal and the acid may be present as salts, e.g. copper sulfate or copper chloride. In an example, the heavy metal waste fluid comprises organic material such as epoxy resin. Additionally the heavy metal waste fluid may comprise additives e.g. oxidation agents, in particular hydrogen peroxide.

In this document, the term "heavy metal" may in particular denote a metal which comprises a density larger than 5,0 g/cm³ (alternatively larger than 4,5 g/cm³). This includes e.g. copper, nickel, cobalt, gold, silver, palladium, tungsten, tin, zinc, iron, lead, chromium, rhodium, cadmium, etc. According to this definition, aluminum, silicon, sodium, potassium, calcium, magnesium, etc. are not denoted as heavy metal, for example.

In the context of this document, the term "ion exchange" may in particular denote any process that is suitable for exchanging ions of a fluid (liquid). The term "ion exchanger" may encompass materials (and devices, respectively) by which dissolved ions can be replaced by other ions of the same charge (positive or negative) (see detailed description further below). Ion exchange may be considered a physico-chemical process with the aim of removing dissolved ionized substances. This method may exploit the ability of a substance to absorb/adsorb ions from a liquid and to release an equivalent amount of other equally charged ions. The exchangeable groups consist of fixed ions and free-moving oppositely charged counterions. These counterions can be exchanged against the ions from the solution, whereby the occurring reactions may be carried out according to stoichiometric laws. Ion exchange materials may be configured as bead-shaped materials (in particular for resins) or as membranes (in particular for electrodialysis).

According to an embodiment, the ion exchange comprises applying an ion exchanger, in particular wherein the ion exchanger comprises an ion exchange resin. Ion exchangers may be realized e.g. as columns which are filled with an ion exchange material, or as membranes through which a solution streams. The ions to be exchanged are bound and adsorbed, respectively, at the ion exchange material. In an example, an ion exchanger comprises a selective ion exchange resin, further in particular a double-functionalized ion exchange resin. In an example a plurality of ion exchangers may be assembled in a cascade.

In the context of this document, the term "regenerating" may in particular denote that a (selective) ion exchanger is transferred from a first operating state to a second operating state. In particular, in the first operating state, a metal (in particular a cation) is adsorbed at the ion exchanger (and ion exchange resin, respectively). Further in particular, in the second operating state, the metal is substantially desorbed. Thus, in the second operating state, the ion exchanger may be operable to be loaded again and may correspondingly assume the first operating state again. Advantageously, regenerating may be repeated multiple times. In an example, regenerating is performed by a regenerating medium, in particular a regenerating acid, such as sulfuric acid and/or hydrochloric acid. Alternatively, regenerating is performed by a regenerating medium comprising alkali metal salts. In regenerating, the regenerating medium may desorb absorbed/adsorbed metal. After purifying, the regenerating medium may be used again. In a further example, the regenerating medium does not have to be purified, so that the metal concentration in the regenerating medium increases with each (regenerating) cycle through the ion exchanger. In this way, in this document, "regenerating" may also be enriching a metal to be recovered. Moreover, in between the first operating state and the second operating step (and vice versa) a rinsing step (comprising water and/or acids) may be applied.

In the context of this document, the term "process fluid" may in particular denote a fluid (liquid and/or gaseous medium) that is suitable to be applied during a component carrier manufacture. For example, the process fluid may be a rinsing/cleaning water to clean the component carriers after a manufacture step such as etching or plating. The process fluid provided to the component carrier manufacture can be preferably water, more preferably fresh and/or purified water. Only in case that the process fluid comprises a specific quality, it may be suitable for rinsing/cleaning purposes. In one example, fresh water is provided as the process fluid. In a further example, the heavy metal waste fluid (which had originally been process fluid) is purified so that a new process fluid is obtained. According to yet a further example, the process fluid may be a mixture of fresh process fluid and processed (heavy metal waste) fluid.

In the context of this document, the term "processed fluid in discharge quality" may in particular denote a (liquid) medium which is allowed to be conducted into a wastewater treatment plant and/or an aquatic environment in compliance with legal standards and boundary values. In an example, the fluid in discharge quality is depleted in (heavy) metals, but may still be enriched in organic components. According to local law, the fluid in discharge quality may not comprise drinking water quality.

In the context of this document, the term "processed fluid in drinking water quality" may in particular denote a (liquid) medium which is drinkable for humans and/or animals according to the legal standards and boundary values. Of course, such a fluid can be discarded into waters, such as rivers, within the local laws and without being harmful for the environment.

In an exemplary example, the processed fluid in drinking water quality may comprise a concentration of copper being 2 mg/l or lower. Further, the following concentrations may be achieved:
Iron < 200 µg/l,
Ammonium < 0.5 mg/l,
Chloride < 200 mg/l,
Nitrate < 50mg/l,
Nitrite <0.1 mg/l,
Sulfate < 250 mg/l,
Led < 10 µg/l.

Such a fluid may be within the legal boundary values, for example of the Republic Austria. The amount of organic compounds may be measured using the CSB (chemical oxygen demand), and may be less than 75 mg/L (in particular less than 65 mg/L). The CSB value may specify the amount of oxygen (in mg/L) which would be required for the oxidation of the oxidizable substances, if oxygen is the oxidizing agent. For example, this boundary value is 75 mg/L in Austria by law.

In the context of the present document, the term "drinking water quality" may in particular refer to (heavy) metal ions (and their corresponding anions) in the component carrier production. In an example, other parameter might not be effected by the treatment steps, e.g. salinity, inorganic trace elements (such as boron, fluoride, etc.). In other words, in a specific example, the term "drinking water quality" refers (essentially) only to the requirements of drinking water quality regarding (heavy) metal ions.

In the context of this document, the term "substantially" may be construed such that negligible residues and/or pollutions may be encompassed which are not removable with acceptable effort anymore. These negligible residues and pollutions, respectively, are (intentionally) not desired in an embodiment, but cannot be removed with a reasonable effort anymore. For example, a medium with drinking water quality may be substantially free from heavy metals, which may denote that negligible residues and pollutions, respectively (e.g. in the lower percent-, per mill-, or even ppm-range) may be present. The skilled person understands that, despite these residues and/or pollutions are not desired, they can nevertheless not be separated in a manner with an acceptable technical effort. In particular, the term "drinking water quality" may denote, that there are "substantially" no heavy metals, since the heavy metal concentration consists only of residues/pollutions and is so low, that discharge in an aqueous environment is allowed.

In the context of this document, the term "closed water cycle" may in particular refer to the circumstance that water within a component carrier manufacture plant is streamed within a cycle, thereby reducing significantly the production of waste fluids. In particular, heavy metal waste fluid from the component carrier manufacture may be processed in the treatment stage to obtain a processed fluid (essentially water) that is either in discharge quality or in drinking quality. In an example, the processed fluid may be streamed back to the component carrier manufacture, is turned into a further heavy metal waster fluid during the component carrier manufacture processes, and is afterwards processed again in the treatment stage to yield a further process fluid that is streamed back to the component carrier manufacture. It follows, that the process fluid may be guided in a circle that is (essentially) closed. Nevertheless, it may be necessary to additionally add fresh process water and to discard at least some of the heavy metal waste fluid and/or the processed fluid. In a further example, other substances from the heavy metal waste fluid may also be recycled, for example from filters of the treatment stage. In a further example, after the (water) purification steps, the purified fluid (water) may be processed in the treatment stage again (in case that on threshold may be too high and purification has to be redone).

In the context of this document, the term "streamable (back)" may in in particular refer to the circumstance that a fluid is guided in a specific direction. A facility, configured so that a fluid is streamable, may hence be designed to stream the fluid (e.g. using a tube, a pump, or a system of channels) in a desired direction. In an example, the facility is configured to stream processed fluid back to the component carrier manufacture. Hereby, a fluid transportation system may be provided in such a manner that the process fluid is streamed from a treatment stage back to the manufacture stage.

In the context of this document, the term "process control device" may in particular denote each device (or plurality of devices) which are suitable for performing a process control, wherein the process (at least partially) concerns a circuit board and/or substrate manufacture. In particular, the process control device is adapted to (at least partially) control and regulate, respectively, a valuable material cycle, wherein residues of the production are fed back such that substantially no (heavy metal and/or acid) wastes occur. For this purpose, the process control device in particular may comprise a database (unit) and a data model unit, wherein the former stores captured processed data, while the latter stores intended desired process data. The process control device may be coupled with a multiplicity of sensors and measuring devices, to determine actual parameters at different process stations in this manner. Furthermore, the process control device may comprise a calculation device which compares the captured parameters with the desired ones and, based thereon, determines and performs a control operation. In a preferred embodiment, the process control device comprises a self-learning algorithm (AI) by which controlling and regulating, respectively, of the process can be continuously improved.

According to an exemplary embodiment, the invention may be based on the idea that a cost-efficient, environmentally friendly, and durable processing of a heavy metal waste fluid from the component carrier manufacture can be provided, when the heavy metal waste fluid is processed in at least one treatment step (in particular at least three (more in particular at least four) specific treatment steps), so that a processed fluid is obtained that comprises drinking water quality and/or is streamed (in a closed water cycle) back to the component carrier manufacture as a recycled process fluid.

Previously treated (eventually cost-intensive) waste fluid may not have to be wasted anymore by discarding them in waters such as canals or rivers. Instead, the processed fluid may be hold in a closed water cycle within the component carrier manufacture, thereby saving resources and costs. A drinking water quality opens two advantages at the same time: a recycled fluid with such a high purification may be i) treated as fresh process fluid, and ii) discarded or used in another plant without any danger of environmental harm.

### Exemplary Embodiments

According to an exemplary embodiment, the at least one treatment step comprises filtering by using a mechanical filter (a pre-filter). This may provide the advantage that (coarse) particles and solids can be removed in a straightforward and efficient manner. In an example, the mechanical filter may comprise pore diameters of 100 µm or less, in particular 50 µm or less, more in particular 20 µm or less. In a further example, the mechanical filter may be cleaned/exchanged, when it becomes blocked by too much filtered material.

According to further exemplary embodiment, the at least one treatment step comprises filtering by using an adsorption unit, in particular an active carbon filter. This may provide the advantage that organic compounds (and/or some metals such as iron) can be removed selectively and efficiently. The adsorption unit may be implemented preferentially as an active carbon filter that is configured to reduce the (amount/concentration of) organic compounds. Active carbon may be a form of carbon commonly used to filter contaminants from fluids such as water and air. It may be processed (activated) to have small, low-volume pores that increase the surface area available for adsorption. In an example, adsorption is used to remove trace substances because the molecules or molecular complexes attach to the surface of a solid. A frequently used medium is activated carbon, as it has many pores and capillaries on the surface to which the particles can adhere well. Substances such as organic chlorine compounds (solvents), hydrocarbons, humic acids, and others can be retained by adsorption and so be separated from the fluid to be processed.

In an example, granulated or powdered activated carbon is used, wherein the granulated active coal can be physically (thermally), as well as chemically, regenerated. The porosity or the surface of the adsorber material may be essential here. For porous solids, a distinction may be made between the outer surface, which has neither pores nor roughness and the inner surface, which covers all pores and roughness. The inner surface of the activated carbon grains may have an area of approximately 500 to 1500 m²/g. In a specific example, Hydraffin 30 N is used as the active carbon. Particle size may be for example a 8x30 mesh, so that the grain is in the range 0.6 to 2.36 mm.

According to further exemplary embodiment, the treatment step comprises filtering by a further adsorption unit, in particular a non-heavy metal ion exchanger, more in particular a mixed-bed resin ion exchanger. This may provide the advantage that the conductance of the heavy metal waste fluid (in particular the processed fluid) can be reduced. Further, undesired materials and/or organic substances such as hydrocarbons may also be removed in this step. In particular, the further adsorption unit may serve as a purification stage that removes residues that had not been separated by the previous stages. Accordingly, the further adsorption unit may be used as (one of) the last treatment step(s).

In a specific example, the mixed-bed resin ion exchanger comprises anion and cation exchange resin, for example in the ration 40:60. While anion resins attract negatively charged ions, cation resins attract positively charged ions.

In a further example, the conductivity of the processed fluid may be reduced to 50 µS/cm or lower, in particular 0.22 µS/cm or lower, by using the further adsorption unit.

In an example, there may be four main types of ion-exchange resins identified based on their functional groups:
i) strongly acidic, typically featuring sulfonic acid groups, e.g. sodium polystyrene sulfonate or polyAMPS,
ii) strongly basic, typically featuring quaternary amino groups, for example, trimethylammonium groups, e.g. polyAPTAC,
iii) weakly acidic, typically featuring carboxylic acid groups,
iv) weakly basic, typically featuring primary, secondary, and/or tertiary amino groups, e.g. polyethylene amine.

Furthermore, chelating resins may be applied such as iminodiacetic acid, thiourea-based resins, etc.

According to further exemplary embodiment, the at least one treatment step comprises filtering by using a heavy metal ion exchanger which comprises a heavy metal ion exchange resin. This may provide the advantage that heavy metals can be separated in a highly efficient and selective manner.

In an embodiment, the ion exchanger may be regenerated after the treatment step, so that valuable heavy metals, in particular copper, can be desorbed and eventually recycled. In this manner, the ion exchanger can be used a plurality of times, thereby saving efforts, while being environmentally friendly. Alternatively, in the case that the ion exchanger is not fully loaded, at least one further treatment step may be performed.

In a specific embodiment, the carrier material of the ion exchange resin of the ion exchanger comprises polystyrene.

In a specific example, it comprises two functionalized groups (double-functionalized ion exchange resin), e.g. a phosphonic acid residue, and a sulfonic acid residue. In an example, the first acid group comprises a higher pKs value than the second acid group. According to an embodiment, it has surprisingly turned out that precisely the use of a special ion exchange resin with two functional groups enables an (efficient) desorption of the metal (in particular iron).

According to further exemplary embodiment, the heavy metal ion exchange resin comprises a weak acid as a functional group, in particular acetic acid (acetoxy functional group).

According to further exemplary embodiment, the heavy metal ion exchange resin comprises as a chelating functional group (chelating resin). For example, diacetic acid, in particular iminodiacetic acid, can be applied such as in the Puromet MTS9300 resin. The chelating functional group may be used in the sodium or potassium form and may in particular comprise for example a copper capacity of 50 g/l or more. In comparison to weak acids such as acetic acid with a denticity of only one, a chelating functional group comprises a denticity of at least two.

In an example, it turned out that an ion exchange resin, which uses a chelating functional group, may be especially efficient in separating heavy metals (selectively) from a heavy metal waste fluid.

According to further exemplary embodiment, the ion of the heavy metal ion exchange resin to be exchanged by heavy metal ions is an alkali metal, in particular sodium and/or potassium. These alkali metal ions may be exchanged against heavy metal ions such as copper or led in a straightforward manner.

According to further exemplary embodiment, the filtration with the adsorption unit is performed before the filtration with the heavy metal ion exchanger, in particular wherein the filtration with the further adsorption unit is performed after the filtration with the heavy metal ion exchanger. It has been surprisingly found by the inventors, that especially this order provides a most efficient processing of a heavy metal waste fluid, so that a processed fluid is in drinking water quality and/or streamable back to the component carrier production. Filtration of organic compounds (and some metals) by the adsorption unit may lead to a more efficient heavy metal separation process. The further adsorption unit may then efficiently purify the processed fluid, after the main waste compounds have been removed.

According to further exemplary embodiment, the at least one treatment step is free of a reverse osmosis process and/or a tangential filtration process. This may provide the advantage that cumbersome and cost-intensive processes can be avoided. Conventionally, treatment processes such as reverse osmosis may be considered crucial to obtain a processed fluid in drinking water quality. Nevertheless, the inventors have surprisingly shown, that the desired result may be achieved in an easier, yet comparably efficient, manner.

According to further exemplary embodiment, the drinking water quality is in accordance with the local drinking water ordinance.

According to further exemplary embodiment, the drinking water quality is in accordance with in particular the Austrian drinking water ordinance BGB1. II Nr. 304/2001, CELEX Nr. 398L000083 (to which it is hereby referenced). Depending on the location of the component carrier manufacture plant, other local laws may apply. Nevertheless, since these water ordinances may be comparable, a common standard for the processed fluid may be developed.

According to further exemplary embodiment, the copper concentration in the processed fluid is 2 mg/l or lower.

According to further exemplary embodiment, the iron concentration in the processed fluid is 200 µg/l or lower.

According to further exemplary embodiment, the ammonium concentration is 0.50 mg/l or lower.

According to further exemplary embodiment, the chloride concentration is 200 mg/l or lower.

According to further exemplary embodiment, the nitrate concentration is 50 mg/l or lower.

According to further exemplary embodiment, the nitrite concentration is 0.1 mg/l or lower.

According to further exemplary embodiment, the sulfate concentration is 250 mg/l or lower.

According to further exemplary embodiment, the led concentration is 10 µg/l or lower.

According to further exemplary embodiment, the component carrier further comprises a recycling stage, configured to stream the processed fluid as a fresh process fluid back to the component carrier manufacture stage. In a basic embodiment, the recycling stage may be implemented as a pipe (and pump) system that streams the processed fluid back to a fresh process fluid reservoir and/or directly to the component carrier manufacture. In a more advanced embodiment, the recycling stage may comprise further treatment stages and/or fluid quality control measures.

In an embodiment, the component carrier is configured as one of the group consisting of a printed circuit board, a substrate (in particular an IC substrate), and an interposer.

In an embodiment, the component carrier is shaped as a plate. This contributes to the compact design, wherein the component carrier nevertheless provides a large basis for mounting components thereon. Furthermore, in particular a naked die as example for an embedded electronic component, can be conveniently embedded, thanks to its small thickness, into a thin plate such as a printed circuit board.

In an embodiment, the component carrier stack comprises at least one electrically insulating layer structure and at least one electrically conductive layer structure. For example, the component carrier may be a laminate of the mentioned electrically insulating layer structure(s) and electrically conductive layer structure(s), in particular formed by applying mechanical pressure and/or thermal energy. The mentioned stack may provide a plate-shaped component carrier capable of providing a large mounting surface for further components and being nevertheless very thin and compact.

In the context of the present application, the term "printed circuit board" (PCB) may particularly denote a plate-shaped component carrier which is formed by laminating several electrically conductive layer structures with several electrically insulating layer structures, for instance by applying pressure and/or by the supply of thermal energy. As preferred materials for PCB technology, the electrically conductive layer structures are made of copper, whereas the electrically insulating layer structures may comprise resin and/or glass fibers, so-called prepreg or FR4 material. The various electrically conductive layer structures may be connected to one another in a desired way by forming holes through the laminate, for instance by laser drilling or mechanical drilling, and by partially or fully filling them with electrically conductive material (in particular copper), thereby forming vias or any other through-hole connections. The filled hole either connects the whole stack, (through-hole connections extending through several layers or the entire stack), or the filled hole connects at least two electrically conductive layers, called via. Similarly, optical interconnections can be formed through individual layers of the stack in order to receive an electro-optical circuit board (EOCB). Apart from one or more components which may be embedded in a printed circuit board, a printed circuit board is usually configured for accommodating one or more components on one or both opposing surfaces of the plate-shaped printed circuit board. They may be connected to the respective main surface by soldering. A dielectric part of a PCB may be composed of resin with reinforcing fibers (such as glass fibers).

In the context of the present application, the term "substrate" may particularly denote a small component carrier. A substrate may be a, in relation to a PCB, comparably small component carrier onto which one or more components may be mounted and that may act as a connection medium between one or more chip(s) and a further PCB. For instance, a substrate may have substantially the same size as a component (in particular an electronic component) to be mounted thereon (for instance in case of a Chip Scale Package (CSP)). In another embodiment, the substrate may be substantially larger than the assigned component (for instance in a flip chip ball grid array, FCBGA, configuration). More specifically, a substrate can be understood as a carrier for electrical connections or electrical networks as well as component carrier comparable to a printed circuit board (PCB), however with a considerably higher density of laterally and/or vertically arranged connections. Lateral connections are for example conductive paths, whereas vertical connections may be for example drill holes. These lateral and/or vertical connections are arranged within the substrate and can be used to provide electrical, thermal and/or mechanical connections of housed components or unhoused components (such as bare dies), particularly of IC chips, with a printed circuit board or intermediate printed circuit board. Thus, the term "substrate" also includes "IC substrates". A dielectric part of a substrate may be composed of resin with reinforcing particles (such as reinforcing spheres, in particular glass spheres).

The substrate or interposer may comprise or consist of at least a layer of glass, silicon (Si) and/or a photoimageable or dry-etchable organic material like epoxy-based build-up material (such as epoxy-based build-up film) or polymer compounds (which may or may not include photo- and/or thermosensitive molecules) like polyimide or polybenzoxazole.

In an embodiment, the at least one electrically insulating layer structure comprises at least one of the group consisting of a resin or a polymer, such as epoxy resin, cyanate ester resin, benzocyclobutene resin, bismaleimide-triazine resin, polyphenylene derivate (e.g. based on polyphenylenether, PPE), polyimide (PI), polyamide (PA), liquid crystal polymer (LCP), polytetrafluoroethylene (PTFE) and/or a combination thereof. Reinforcing structures such as webs, fibers, spheres or other kinds of filler particles, for example made of glass (multilayer glass) in order to form a composite, could be used as well. A semi-cured resin in combination with a reinforcing agent, e.g. fibers impregnated with the above-mentioned resins is called prepreg. These prepregs are often named after their properties e.g. FR4 or FR5, which describe their flame retardant properties. Although prepreg particularly FR4 are usually preferred for rigid PCBs, other materials, in particular epoxy-based build-up materials (such as build-up films) or photoimageable dielectric materials, may be used as well. For high frequency applications, high-frequency materials such as polytetrafluoroethylene, liquid crystal polymer and/or cyanate ester resins, may be preferred. Besides these polymers, low temperature cofired ceramics (LTCC) or other low, very low or ultra-low DK materials may be applied in the component carrier as electrically insulating structures.

In an embodiment, the at least one electrically conductive layer structure comprises at least one of the group consisting of copper, aluminum, nickel, silver, gold, palladium, tungsten, magnesium, carbon, (in particular doped) silicon, titanium, and platinum. Although copper is usually preferred, other materials or coated versions thereof are possible as well, in particular coated with supra-conductive material or conductive polymers, such as graphene or poly(3,4-ethylenedioxythiophene) (PEDOT), respectively.

At least one further component may be embedded in and/or surface mounted on the stack. The component and/or the at least one further component can be selected from a group consisting of an electrically non-conductive inlay, an electrically conductive inlay (such as a metal inlay, preferably comprising copper or aluminum), a heat transfer unit (for example a heat pipe), a light guiding element (for example an optical waveguide or a light conductor connection), an electronic component, or combinations thereof. An inlay can be for instance a metal block, with or without an insulating material coating (IMS-inlay), which could be either embedded or surface mounted for the purpose of facilitating heat dissipation. Suitable materials are defined according to their thermal conductivity, which should be at least 2 W/mK. Such materials are often based, but not limited to metals, metal-oxides and/or ceramics as for instance copper, aluminium oxide (Al₂O₃) or aluminum nitride (AIN). In order to increase the heat exchange capacity, other geometries with increased surface area are frequently used as well. Furthermore, a component can be an active electronic component (having at least one p-n-junction implemented), a passive electronic component such as a resistor, an inductance, or capacitor, an electronic chip, a storage device (for instance a DRAM or another data memory), a filter, an integrated circuit (such as field-programmable gate array (FPGA), programmable array logic (PAL), generic array logic (GAL) and complex programmable logic devices (CPLDs)), a signal processing component, a power management component (such as a field-effect transistor (FET), metal-oxide-semiconductor field-effect transistor (MOSFET), complementary metal-oxide-semiconductor (CMOS), junction field-effect transistor (JFET), or insulated-gate field-effect transistor (IGFET), all based on semiconductor materials such as silicon carbide (SiC), gallium arsenide (GaAs), gallium nitride (GaN), gallium oxide (Ga₂O₃). indium gallium arsenide (InGaAs), indium phosphide (InP) and/or any other suitable inorganic compound), an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit. However, other components may be embedded in the component carrier. For example, a magnetic element can be used as a component. Such a magnetic element may be a permanent magnetic element (such as a ferromagnetic element, an antiferromagnetic element, a multiferroic element or a ferrimagnetic element, for instance a ferrite core) or may be a paramagnetic element. However, the component may also be a IC substrate, an interposer or a further component carrier, for example in a board-in-board configuration. The component may be surface mounted on the component carrier and/or may be embedded in an interior thereof. Moreover, also other components, in particular those which generate and emit electromagnetic radiation and/or are sensitive with regard to electromagnetic radiation propagating from an environment, may be used as component.

In an embodiment, the component carrier is a laminate-type component carrier. In such an embodiment, the component carrier is a compound of multiple layer structures which are stacked and connected together by applying a pressing force and/or heat.

After processing interior layer structures of the component carrier, it is possible to cover (in particular by lamination) one or both opposing main surfaces of the processed layer structures symmetrically or asymmetrically with one or more further electrically insulating layer structures and/or electrically conductive layer structures. In other words, a build-up may be continued until a desired number of layers is obtained.

After having completed formation of a stack of electrically insulating layer structures and electrically conductive layer structures, it is possible to proceed with a surface treatment of the obtained layers structures or component carrier.

In particular, an electrically insulating solder resist may be applied to one or both opposing main surfaces of the layer stack or component carrier in terms of surface treatment. For instance, it is possible to form such a solder resist on an entire main surface and to subsequently pattern the layer of solder resist so as to expose one or more electrically conductive surface portions which shall be used for electrically coupling the component carrier to an electronic periphery. The surface portions of the component carrier remaining covered with solder resist may be efficiently protected against oxidation or corrosion, in particular surface portions containing copper.

It is also possible to apply a surface finish selectively to exposed electrically conductive surface portions of the component carrier in terms of surface treatment. Such a surface finish may be an electrically conductive cover material on exposed electrically conductive layer structures (such as pads, conductive tracks, etc., in particular comprising or consisting of copper) on a surface of a component carrier. If such exposed electrically conductive layer structures are left unprotected, then the exposed electrically conductive component carrier material (in particular copper) might oxidize, making the component carrier less reliable. A surface finish may then be formed for instance as an interface between a surface mounted component and the component carrier. The surface finish has the function to protect the exposed electrically conductive layer structures (in particular copper circuitry) and enable a joining process with one or more components, for instance by soldering. Examples for appropriate materials for a surface finish are Organic Solderability Preservative (OSP), Electroless Nickel Immersion Gold (ENIG), Electroless Nickel Immersion Palladium Immersion Gold (ENIPIG), Electroless Nickel Electroless Palladium Immersion Gold (ENEPIG), gold (in particular hard gold), chemical tin (chemical and electroplated), nickel-gold, nickel-palladium, etc. Also nickel-free materials for a surface finish may be used, in particular for high-speed applications. Examples are ISIG (Immersion Silver Immersion Gold), and EPAG (Electroless Palladium Autocatalytic Gold).

The aspects defined above and further aspects of the invention are apparent from the examples of embodiment to be described hereinafter and are explained with reference to these examples of embodiment.

### Brief Description of the Drawings

Figure 1 shows a component carrier manufacture plant configured to produce drinkable water according to an exemplary embodiment of the invention.
Figure 2 shows a component carrier manufacture plant configured to recycle processed fluid in a closed water cycle according to a further exemplary embodiment of the invention.
Figure 3 shows a treatment stage of a component carrier manufacture according to an exemplary embodiment of the invention.

The illustrations in the drawings are schematic. In different drawings, similar or identical elements are provided with the same reference signs.

### Detailed Description of the Drawings

**Figure 1** shows a component carrier manufacture plant 100 configured to produce drinkable water according to an exemplary embodiment of the invention. A process fluid (e.g. purified water) 101 is provided from a process fluid provision stage to the component carrier manufacture process 110. During the manufacture 110 of the component carriers, chemical method steps such as etching, plating, etc. are applied, so that a heavy metal waste fluid 102 is produced from the original process fluid 101. The heavy metal waste fluid 102 is highly enriched in heavy metals such as copper and iron and can further be highly acidic.

A first part (for example one third) of the heavy metal waste fluid 102 is present as a (insoluble) mud 103 that cannot be processed further and therefore has to be discarded/recycled professionally external of the component carrier manufacture plant 100.

However, a larger second part of the heavy metal waste fluid 102 (e.g. two third) is processed in a treatment stage 120 downstream of the manufacture stage 110. In the treatment stage 120 (see Figure 3 below for details), the heavy metal waste fluid 102 is processed by at least one treatment step (in particular at least three specific treatment steps) to obtain a processed fluid 105 with drinking water quality. The processed fluid 105 with drinking water quality can be streamed into a river or lake without any danger to produce environmental harm. Thus, instead of spending efforts to produce a water in discharge quality, the (comparable) effort is spent to produce a water in drinking quality. It follows that, without having additional efforts, a large advantage for the environment and durability is provided.

A drinking water quality is in this example in accordance with the local drinking water ordinance such as the Austrian drinking water ordinance BGB1. II Nr. 304/2001, CELEX Nr. 398L000083. The copper concentration in the processed fluid 105 is hereby 2 mg/l or lower, and the iron concentration in the processed fluid 105 is 200 µg/l or lower.

**Figure 2** shows a component carrier manufacture plant 100 configured to recycle processed fluid 105 in a closed water cycle according to a further exemplary embodiment of the invention. The component carrier manufacture plant 100 is comparable with the one described for Figure 1, yet comprises an additional recycling stage 130 arranged between the treatment stage 120 and the process fluid provision stage 101.

In this embodiment, the processed fluid 105 (in drinking water quality or in discharge quality) is streamed via the recycling stage 130 back to the process fluid provision stage 101. When the processed fluid 105 enters the process fluid provision stage 101, it can be considered as a new process fluid 101. In other words, the processed fluid 105 is streamed as new process fluid 101 back to the component carrier manufacture process 110, thereby providing a closed water cycle within the component carrier manufacture plant 100.

Additional process fluid 101 can be supported from other fresh process fluid sources 104. Even though this example is focused on the recycling aspect (and the discharge into a river is avoided), there can be another embodiment, wherein the processed fluid 105 comprises drinking water quality and is both, partially discharged and partially streamed back to the component carrier manufacture 110.

**Figure 3** shows a treatment stage 120 of a component carrier manufacture 100 configured to process the heavy metal waste fluid 102 according to an exemplary embodiment of the invention.

The first treatment step comprises a filtration step by using a mechanical filter 121. In this step, coarse material such as particles and grains are separated from the heavy metal waste fluid 102.

The second treatment step comprises a filtration by an adsorption unit, in this example an active carbon filter 122. Hereby, organic compounds can be efficiently removed. Further, the active carbon filter 122 can also separate other components, such as metals like iron, from the heavy metal waste fluid 102.

The third treatment step comprises a filtration by a heavy metal ion exchanger 125 which comprises a heavy metal ion exchange resin. The heavy metal ion exchange resin comprises a chelating functional group, for example an iminodiacetic-based resin. The ion of the heavy metal ion exchange resin to be exchanged by heavy metal ions is an alkali metal like sodium and/or potassium in this example (for example two sodium ions bound to the iminodiacetic are exchanged against one copper ion). According to its name, the heavy metal ion exchange resin exchanges selectively heavy metal ions from the heavy metal waste fluid 102 against alkali metal ions from the ion exchange resin. In this manner, heavy metals such as copper can be efficiently separated from the fluid to be processed 102.

The fourth treatment step comprises filtering by a further adsorption unit, in this example a non-heavy metal ion exchanger 123 being a mixed-bed resin ion exchanger. This ion exchanger comprises, in comparison to the heavy metal ion exchanger 125, two resins ("mixed bed"), an anion resin and a cation resin. The mixed-bed resin ion exchanger 123 can be used for optimizing the filtration quality, because it filters remaining components that have not been removed by the previous stages. Additionally, the mixed-bed resin ion exchanger 123 can lower the conductivity of the heavy metal waste fluid 102, thereby contributing to the drinking water quality of the final processed fluid 105.

As can be seen in Figure 3, the filtration with the active carbon filter step 122 is performed before the filtration with the heavy metal ion exchanger filtering step 125, and the filtration with the non-heavy metal ion exchanger filtering step 123 is performed after the filtration with the heavy metal ion exchanger 125. It turned out that especially this order is highly efficient for processing the heavy metal waste fluid 102, so that even a water in drinking quality can be obtained. In this manner, cost- and effort-intensive processing steps such as reverse osmosis or tangential filtration processes can be avoided.

### Reference signs

- 100: Component carrier manufacture plant
- 101: Fresh process water
- 102: Heavy metal waste fluid
- 103: Non-recyclable waste
- 104: Additional fresh process water
- 105: Processed fluid
- 110: Component carrier manufacture stage
- 120: Treatment stage
- 121: Mechanical filter stage
- 122: Adsorption unit, active coal filter stage
- 123: Further adsorption unit, non heavy metal ion exchanger
- 125: Heavy metal ion exchanger
- 130: Recycling stage

## Claims

1. A method of manufacturing component carriers in a component carrier manufacture plant (100), the method comprising:
providing a process fluid (101) to a component carrier manufacture process (110);
manufacturing the component carriers (110), thereby producing a heavy metal waste fluid (102); and
processing the heavy metal waste fluid (102) by at least one treatment step to obtain a processed fluid (101, 105) with drinking water quality.

2. The method according to claim 1,
wherein the at least one treatment step comprises filtering by a mechanical filter (121).

3. The method according to claim 1 or 2,
wherein the at least one treatment step comprises filtering by an adsorption unit, in particular an active carbon filter (122).

4. The method according to any one of the preceding claims,
wherein the at least one treatment step comprises filtering by a further adsorption unit, in particular a non-heavy metal ion exchanger (123), more in particular a mixed-bed resin ion exchanger.

5. The method according to any one of the preceding claims,
wherein the at least one treatment step comprises filtering by a heavy metal ion exchanger (125) which comprises a heavy metal ion exchange resin.

6. The method according to claim 5,
wherein the heavy metal ion exchange resin comprises as a chelating functional group, in particular a diacetic acid-based resin, more in particular an iminodiacetic acid-based resin.

7. The method according to claim 5 or 6,
wherein the ion of the heavy metal ion exchange resin to be exchanged by heavy metal ions is an alkali metal, in particular sodium and/or potassium.

8. The method according to any one of the preceding claims,
wherein the filtration with the adsorption unit (122) is performed before the filtration with the heavy metal ion exchanger (125), in particular wherein the filtration with the further adsorption unit (123) is performed after the filtration with the heavy metal ion exchanger (125).

9. The method according to any one of the preceding claims,
wherein the at least one treatment step is free of a reverse osmosis process and/or a tangential filtration process.

10. The method according to any one of the preceding claims,
wherein the drinking water quality is in accordance with the local drinking water ordinance,
in particular the Austrian drinking water ordinance BGB1. II Nr. 304/2001, CELEX Nr. 398L000083.

11. The method according to claim 10,
wherein the copper concentration in the processed fluid (105) is 2 mg/l or lower, and/or
wherein the iron concentration in the processed fluid (105) is 200 µg/l or lower.

12. A method of manufacturing component carriers in a component carrier manufacture plant (100), the method comprising:
providing a process fluid (101) to a component carrier manufacture process (110);
manufacturing the component carriers (110), thereby producing a heavy metal waste fluid (102);
processing the heavy metal waste fluid (102) by at least one treatment step to obtain a processed fluid (105), in particular in drinking water quality; and
streaming the processed fluid (105) as the process fluid (101) back to the component carrier manufacture process (100), thereby providing a closed process water cycle.

13. A component carrier manufacture plant (100), comprising:
a component carrier manufacture stage (110), configured to manufacture component carriers using a process fluid (101, 105), whereby a heavy metal waste fluid (102) is produced from the process fluid (101, 105); and
a treatment stage (120), arranged process-downstream of the component carrier manufacture stage (110), and configured to process the heavy metal waste fluid (102) in at least one treatment step, so that the processed fluid (101, 105) comprises drinking water quality.

14. The component carrier manufacture plant (100) according to claim 13, further comprising:
a recycling stage (130), configured to stream the processed fluid (105) as a fresh process fluid (101) back to the component carrier manufacture stage (110).

15. Using the combined treatment steps of an active coal filter (122), a heavy metal ion exchanger (125), and a mixed-bed ion exchanger (123), in particular in this order, to process a component carrier manufacture heavy metal waste fluid (102) so that an obtained processed fluid (105) is in drinking water quality and/or is streamable back to the component carrier manufacture (110) in a closed water cycle.
